# EUROPÄISCHE PATENTSCHRIFT

(11) **EP 0 862 052 B1**
(45) Veröffentlichungstag und Bekanntmachung des Hinweises auf die Patenterteilung: **11.12.2002**
(21) Anmeldenummer: 98103048.9
(22) Anmeldetag: 20.02.1998
(51) Int. Cl.: G01L 19/06, G01L 19/00

(54) **Druckmessumformer**
Pressure transducer
Transducteur de pression

(30) Priorität: 26.02.1997 DE 29704321 U
(43) Veröffentlichungstag der Anmeldung: 02.09.1998
(73) Patentinhaber: SIEMENS AKTIENGESELLSCHAFT, 80333 München (DE)
(72) Erfinder: Adolf, Sven, 13359 Berlin (DE); Stündl, Matthias, 14478 Potsdam (DE)

(56) Entgegenhaltungen:
- WO-A-88/09921
- US-A- 5 060 520
- US-A- 5 184 514

## Beschreibung

Die Erfindung bezieht sich auf einen Druckmeßumformer mit einem nach außen durch eine Trennmembran abgeschlossenen Meßkammergehäuse, bei dem die Trennmembran gemeinsam mit einem Druckring im Randbereich des Meßkammergehäuses angeschweißt ist, sich in einer umlaufenden Nut an einer von dem Meßkammergehäuse abgewandten Außenseite des Druckringes dicht an dessen inneren Rand ein Dichtungsring befindet und gegen die Außenseite des Druckringes eine Anschlußkappe gesetzt ist.

Bei einem bekannten Druckmeßumformer dieser Art, der in Form des Meßumformers 3051 der Firma Rosemount offenkundig vorbenutzt ist, befindet sich ein Druckring in einer Ausnehmung eines Meßkammergehäuses und ist zusammen mit dem Rand der Trennmembran mit dem Meßkammergehäuse verschweißt. Der Druckring weist auf seiner von dem Meßkammergehäuse abgewandten Seite eine Nut auf, in die ein Dichtungsring eingelegt ist. Gegen die Außenseite des Druckringes und damit auch gegen den Dichtring ist eine Anschlußkappe gesetzt, die das Meßkammergehäuse auch an seiner außerhalb des Druckringes liegenden Stirnfläche überdeckt, wodurch zwischen dem Dichtring und dem äußeren Rand des Meßkammergehäuses bzw. der Anschlußkappe eine zünddurchschlagsichere Strecke gebildet ist.

Der Erfindung liegt die Aufgabe zugrunde, einen Druckmeßumformer vorzuschlagen, der sich durch ein vergleichsweise kompaktes Meßkammergehäuse auszeichnet.

Zur Lösung dieser Aufgabe entspricht bei einem Druckmeßumformer der eingangs angegebenen Art erfindungsgemäß der Druckring in seinem Außendurchmesser dem Außendurchmesser des Meßkammergehäuses und ist so breit ausgeführt, daß sich der Dichtungsring vollkommen oberhalb des auslenkbaren Bereichs der Trennmembran in einer solchen Lage befindet, daß zusammen mit der Anschlußkappe eine zünddurchschlagsichere Strecke zum Rand des Meßkammergehäuses hin gewährleistet ist.

Ein wesentlicher Vorteil des erfindungsgemäßen Druckmeßumformers besteht darin, daß infolge der Verlagerung des Dichtungsringes nach innen eine zünddurchschlagsichere Strecke zum Rand des Meßkammergehäuses hin erzeugt wird, ohne daß dieses wegen der Zünddurchschlagsicherheit radial entsprechend groß ausgeführt sein muß. Bei dem erfindungsgemäßen Meßumformer ergeben sich die Außenabmaße des Meßkammergehäuses allein durch die erforderliche Abmessung der Trennmembran und einer innerhalb des Meßkammergehäuses angeordneten Druckerfassungseinrichtung. Es muß also das Meßkammergehäuse nicht im Hinblick auf die Sicherstellung einer zünddurchschlagsicheren Strecke im Außendurchmesser vergrößert sein. Ein weiterer Vorteil besteht darin, daß wegen des nach innen gezogenen Dichtungsringes die wirksame Dichtfläche kleiner wird, so daß die Schraubkräfte zur Anbringung der Anschlußkappe relativ klein sein können.

Es ist zwar aus der US-Patentschrift 4 163 395 ein Druckmeßumformer bekannt, bei dem gemeinsam mit einem in seinem Außendurchmesser mit einem Meßkammergehäuse übereinstimmenden Druckring eine Trennmembran mit dem Meßkammergehäuse verschweißt ist, jedoch ist bei diesem Druckmeßumformer ein Dichtungsring in einer umlaufenden Nut einer Anschlußkappe vorgesehen; der Dichtungsring ist im Bereich des Einspannrandes der Trennmembran gelegen.

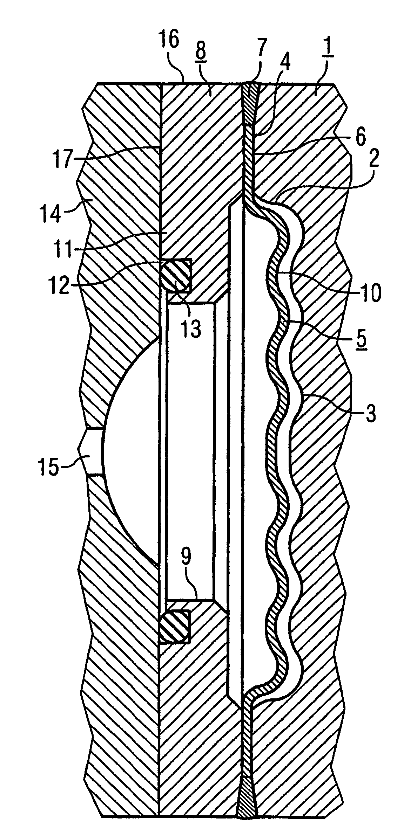

Zur weiteren Erläuterung der Erfindung ist in der Figur der im Zusammenhang mit der Erfindung wesentliche Teil eines Ausführungsbeispiels des erfindungsgemäßen Druckmeßumformers dargestellt.

Der in einem Ausschnitt gezeigte Druckmeßumformer weist ein Meßkammergehäuse 1 auf, das an einer Seite 2 mit einem Membranbett 3 versehen ist. An einem äußeren Rand 4 des Meßkammergehäuses 1 ist eine Trennmembran 5 mit ihrem Rand 6 mittels einer Schweißnaht 7 verbunden, mittels der gleichzeitig ein Druckring 8 mit dem Meßkammergehäuse 1 verbunden ist.

Der Druckring 8 weist einen Außendurchmesser auf, der dem des Meßkammergehäuses 1 entspricht, und ist so breit ausgeführt, daß er mit seinem inneren Rand 9 relativ weit über den Rand 6 nach innen gegenüber dem auslenkbaren Bereich 10 der Trennmembran 5 liegt. Dicht am inneren Rand 9 auf der von dem Meßkammergehäuse 1 abgewandten Seite 11 des Druckringes 8 ist eine umlaufende Nut 12 vorgesehen, in der sich ein Dichtungsring 13 befindet.

Gegen die Außenseite 11 des Druckringes 8 ist eine Anschlußkappe 14 gesetzt, die nur zum Teil dargestellt ist. Die Anschlußkappe 14 ist mit einer Durchgangsöffnung 15 versehen, über die der Druckmeßumformer mit einem Druck beaufschlagt werden kann. Zwischen dem Dichtungsring 13 und dem äußeren Rand 16 des Druckringes 8 ist gemeinsam mit der Anschlußkappe 14 eine zünddurchschlagsichere Strecke 17 gebildet, die aufgrund des relativ weit ins Innere verlagerten Dichtungsringes 13 eine ausreichende Länge aufweist, ohne daß das Meßkammergehäuse 1 nach außen hin aufgeweitet sein muß.

Bei dem dargestellten Druckmeßumformer kann es sich beispielsweise um einen Druckdifferenz-Meßumformer handeln; in diesem Falle ist gewissermaßen spiegelbildlich zum Meßkammergehäuse 1 eine weitere Trennmembran mit einem weiteren Druckring und einer weiteren Anschlußkappe angeordnet.

## Patentansprüche

1. Druckmeßumformer mit einem nach außen durch eine Trennmembran abgeschlossenen Meßkammergehäuse (1), bei dem
- die Trennmembran (5) gemeinsam mit einem Druckring (8) im Randbereich des Meßkammergehäuses (1) angeschweißt ist,
- sich in einer umlaufenden Nut (12) an einer von dem Meßkammergehäuse (1) abgewandten Außenseite (11) des Druckringes (8) dicht an dessen inneren Rand (9) ein Dichtungsring (13) befindet und
- gegen die Außenseite (11) des Druckringes (8) eine Anschlußkappe (14) gesetzt ist,
**dadurch gekennzeichnet, daß**
- der Druckring (8) in seinem Außendurchmesser dem Außendurchmesser des Meßkammergehäuses (1) entspricht und
- der Druckring (8) so breit ausgeführt ist, daß sich der Dichtungsring (13) vollkommen oberhalb des auslenkbaren Bereichs (10) der Trennmembran (5) in einer solchen Lage befindet, daß zusammen mit der Anschlußkappe (14) eine zünddurchschlagsichere (17) Strecke zum Rand (16) des Meßkammergehäuses (1) hin gewährleistet ist.

## Claims

1. Pressure transducer having a measuring-chamber housing (1) that is closed outwardly by means of a separating diaphragm, in which
- the separating diaphragm (5), jointly with a pressure ring (8), is welded on in the edge region of the measuring-chamber housing (1),
- a sealing ring (13) is located in a circumferential groove (12) on an outer side (11) of the pressure ring (8) that is remote from the measuring-chamber housing (1) close to the pressure ring's inner edge (9), and
- a connecting cap (14) is set against the outer side (11) of the pressure ring (8),
**characterised in that**
- the outside diameter of the pressure ring (8) corresponds to the outside diameter of the measuring-chamber housing (1), and
- the pressure ring (8) is constructed so as to be so wide that the sealing ring (13) is located completely above the deflectable region (10) of the separating diaphragm (5) in such a position that together with the connecting cap (14) a flameproof section (17) towards the edge (16) of the measuring-chamber housing (1) is guaranteed.

## Revendications

1. Transducteur de pression comportant un boîtier (1) de chambre de mesure fermé vers l'extérieur par une membrane séparatrice, suivant lequel :
- la membrane (5) séparatrice est soudée conjointement avec une bague (8) de compression dans la région de bord du boîtier (1) de chambre de mesure,
- une bague (13) d'étanchéité se trouve dans une rainure (12) entourante sur un côté (11) extérieur de la bague (8) de compression qui est opposé au boîtier (1) de chambre de mesure, en étant serrée contre le bord (9) intérieur de la bague (8) de compression,
- une coiffe (14) de raccordement est posée contre le côté (11) extérieur de la bague (8) de compression,
**caractérisé en ce que**
- le diamètre extérieur de la bague (8) de compression correspond au diamètre extérieur du boîtier (1) de chambre de mesure, et
- la bague (8) de compression est réalisée suffisamment large pour que la bague (13) d'étanchéité se trouve entièrement au-dessus de la région (10) déviable de la membrane (5) séparatrice, dans une position propre à garantir, conjointement avec la coiffe (14) de raccordement, un passage (17) de protection contre les claquages menant jusqu'au bord (16) du boîtier (1) de chambre de mesure.
